# EUROPEAN PATENT APPLICATION

(11) **EP 4 458 462 A1**
(43) Date of publication of application: **06.11.2024**
(21) Application number: 22914229.4
(22) Date of filing: 13.12.2022
(51) Int. Cl.: B01J 20/04, B01J 20/08, C22B 26/12, C02F 1/28

(54) **LITHIUM SORBENT, PREPARATION METHOD FOR LITHIUM SORBENT, AND SALT LAKE LITHIUM EXTRACTION METHOD**

(30) Priority: 28.12.2021 CN 202111630402
(71) Applicant: BYD Company Limited, Shenzhen, Guangdong 518118 (CN)
(72) Inventor: WEI, Jialiang, Shenzhen, Guangdong 518118 (CN); LIN, Hongye, Shenzhen, Guangdong 518118 (CN); LIAN, Junlan, Shenzhen, Guangdong 518118 (CN)
(74) Representative: Gulde & Partner
(86) International application number: PCT/CN2022/138705
(87) International publication number: WO 2023/124974

(57) **Abstract**

A lithium adsorbent is provided, which includes an adsorbent material, a binder, and a wetting and dispersing agent. The binder includes at least one of a vinylidene fluoride-chlorotrifluoroethylene copolymer and a fluoroolefin-vinyl ether copolymer; and the wetting and dispersing agent includes one or more of polyethylene glycol, sodium polyacrylate, polyvinyl alcohol, and a formaldehyde condensate. A method for preparing the lithium adsorbent and a method for extracting lithium from salt lake using the lithium adsorbent are further provided.

## Description

### CROSS-REFERENCE TO RELATED APPLICATIONS

The present disclosure claims priority to Chinese Patent Application No. 202111630402.6, filed on December 28, 2021 and entitled "LITHIUM ADSORBENT AND METHOD FOR LITHIUM EXTRACTION FROM SALT LAKE", which is incorporated herein by reference in its entirety.

### FIELD

The present disclosure relates to the field of environmental protection and resource recycling, and specifically, to a lithium adsorbent, a preparation method for the lithium adsorbent, and a method for extracting lithium from salt lake.

### BACKGROUND

At present, lithium resources are primarily stored in salt lake brine, and the salt lake brine largely has high magnesium-to-lithium ratio. Therefore, lithium extraction from brine with a high magnesium-to-lithium ratio becomes a focus in the development of lithium resources. The adsorption method developed in recent years is widely used due to its advantages of good selectivity for lithium ions, simple process, capability of extracting lithium from salt lake brine with high magnesium-to-lithium ratio, low cost, and the like.

The key to the adsorption method is to develop lithium adsorbents with excellent performances. However, in the process of lithium extraction by the current adsorption method, the lithium adsorbent used has low adsorption efficiency for lithium and high rate of self-dissolution loss, the adsorbed lithium is difficult to be washed and desorbed, a large amount of water is consumed during the washing of adsorbed lithium, and the loss rate of lithium during washing is high.

### SUMMARY

To solve the above technical problems, the present disclosure provides a lithium adsorbent that can be used in the process of extracting lithium from salt lake. At least one of a vinylidene fluoride-chlorotrifluoroethylene copolymer and a fluoroolefin-vinyl ether copolymer is used as a binder, which is combined with a particular wetting and dispersing agent, so that the lithium adsorbent is of good mechanical strength and low dissolution-loss rate, the lithium adsorption efficiency is improved, the service life is prolonged, the water consumption in the process of washing and lithium desorption of the adsorbent is saved, and the temperature of lithium desorption is reduced, and a desorption solution with a low magnesium-lithium ratio is obtained.

According to a first aspect of the present disclosure, a lithium adsorbent is provided, including an adsorbent material, a binder, and a wetting and dispersing agent. The binder includes at least one of a vinylidene fluoride-chlorotrifluoroethylene (VDF-CTFE) copolymer and a fluoroolefin-vinyl ether copolymer (also referred to as FEVE fluorocarbon resin). The wetting and dispersing agent includes one or more of polyethylene glycol, sodium polyacrylate, polyvinyl alcohol, and a formaldehyde condensate.

In the lithium adsorbent provided in the present disclosure, the particular binder binds the adsorbent material and the wetting and dispersing agent together to form a lithium adsorbent having high structural stability, high mechanical strength, good corrosion resistance, and low dissolution-loss rate and long service life after repeated lithium adsorption-desorption cycles. Moreover, the binder also allows the adsorbent to have a surface state with suitable porosity and narrow pore size. As a result, the lithium adsorbent is of a high lithium adsorption efficiency, and the adsorption speed and efficiency of the lithium adsorbent will not be affected due to the reduction of effective active area. The wettability of the wetting and dispersing agent also contribute to the improvement of the adsorption efficiency and adsorption capacity of the adsorbent for lithium ions. In addition, with the synergistic effect of the surface smoothness and cleaning effect of the particular binders and the wettability of the wetting and dispersing agent, the impurities can be easily washed off during the washing process of the lithium adsorbent after adsorbing lithium, and the process of lithium desorption is convenient. This saves water consumption in the cleaning and desorption process, reduces the rate of dissolution loss of the adsorbent in these processes, and lowers the desorption temperature, thus being of great significance for industrialized lithium extraction in areas with serious energy shortages such as salt lakes. Qualified desorption solution with low magnesium-lithium ratio and high lithium content is obtained. Therefore, the lithium adsorbent is of high mechanical strength and structural stability, high lithium adsorption efficiency, easy washing-off of the surface impurities, easy desorption of adsorbed lithium ions, low water consumption, and low lithium desorption temperature, with which a desorption solution with low magnesium-lithium ratio can be obtained.

During lithium extraction from salt lake with the lithium adsorbent, the lithium adsorption efficiency is increased by 10% or more. For example, the extraction rate by adsorption by the lithium adsorbent can reach 70-90% at a brine flow rate of 2.0-2.5 BV/h, and the lithium adsorbent is resistant to impact and corrosion of the brine, and is of an annual dissolution-loss rate of less than 5% (where the dissolution-loss rate refers to the weight percentage of the loss of the lithium adsorbent over time), and a long service life. The total water consumption for washing and desorption of the lithium adsorbent with adsorbed lithium ions can be reduced by about 20%, having great economic and environmental benefits. In addition, the desorption temperature for eluting and desorbing the absorbed lithium ions on the adsorbent can be reduced by 10°C or more, or even about 30°C, and a qualified desorption solution with a lithium content higher than 500 mg/L can still be obtained.

In some embodiments, based on a weight of the lithium adsorbent, a content of the adsorbent material is 80 wt%-95 wt%, a content of the binder is 4 wt%-17 wt%, and a content of the wetting and dispersing agent is 1 wt%-5 wt%.

In some embodiments, a ratio of a weight of the adsorbent material to a total weight of the binder and the wetting and dispersing agent is greater than or equal to 8:1.

In some embodiments, a weight of the binder is 8%-12.5% of a weight of the adsorbent material.

In some embodiments, a molecular weight of the vinylidene fluoride-chlorotrifluoroethylene copolymer or the fluoroolefin-vinyl ether copolymer is 100,000-800,000.

In some embodiments, a molar ratio of a structural unit derived from vinylidene fluoride to a structural unit derived from chlorotrifluoroethylene in the vinylidene fluoride-chlorotrifluoroethylene copolymer is 1: (1-5).

In some embodiments, the wetting and dispersing agent includes polyethylene glycol having a molecular weight of 10000-30000.

In some embodiments, the wetting and dispersing agent includes sodium polyacrylate having a molecular weight of 5000-10000.

In some embodiments, the wetting and dispersing agent includes a formaldehyde condensate having a molecular weight of 4000-10000.

In some embodiments, a weight of the wetting and dispersing agent is1%-5% of a weight of the adsorbent material.

In some embodiments, the adsorbent material is an aluminum-based adsorbent material, which can be represented by LiₐX·mAl(OH)₃·nH₂O, in which X is Cl⁻ or SO₄²⁻, a=1 or 2, m is 1-5, and n is 1-5.

In some embodiments, the lithium adsorbent is columnar granules, and a granule diameter of the lithium adsorbent is1.2 mm to 1.8 mm and a length of the lithium adsorbent is 1.5 mm to 2.5 mm.

In some embodiments, a porosity of the lithium adsorbent is20%-45%, and a pore size distribution of the lithium adsorbent is in the range of 1 nm -100 nm.

According to a second aspect of the present disclosure, a method for preparing a lithium adsorbent is further provided, which is used to prepare the lithium adsorbent according to the first aspect of the present disclosure. The preparation method includes the following steps. The binder, the wetting and dispersing agent, the adsorbent material, and a solvent are mixed to obtain a mixed material. The binder includes at least one of the vinylidene fluoride-chlorotrifluoroethylene copolymer and the fluoroolefin-vinyl ether copolymer, and the wetting and dispersing agent includes polyethylene glycol. The mixed material is granulated to obtain the lithium adsorbent.

In some embodiments, the mixing method includes one or more of stirring, ball milling and mechanical fusion.

In some embodiments, the step of mixing the binder, the wetting and dispersing agent, the adsorbent material and the solvent includes the following steps. The binder, the wetting and dispersing agent, and the solvent are mixed, and then the adsorbent material is added and mixed.

The preparation method of the lithium adsorbent provided in the present disclosure is simple, easy to operate and suitable for use in large-scale production, and the prepared lithium adsorbent has stable structure, long service life and good lithium adsorption/desorption effect.

According to a third aspect of the present disclosure, a method for extracting lithium from salt lake is provided, which includes the following steps. The salt lake brine is contacted with the lithium adsorbent described in the first aspect of the disclosure to perform lithium adsorption, to obtain a lithium-rich adsorbent. The lithium-rich adsorbent is washed, and then lithium is desorbed by using a desorbing agent to obtain a desorption solution.

In the method for extracting lithium from salt lake provided in the present disclosure, the salt lake brine is contacted with the lithium adsorbent for the purpose of adsorbing lithium ions in the salt lake brine on the lithium adsorbent and transforming the lithium adsorbent into a lithium-rich adsorbent. The lithium adsorbent can be filled in a carrier such as an exchange column (e.g. glass column, stainless steel column) or an adsorption tower. The adsorption of lithium in the salt lake brine can be realized by flowing the brine through the carrier filled with the lithium adsorbent and contacting the brine with the lithium adsorbent. Then, the carrier filled with the lithium-rich adsorbent is washed to wash off impurities on the surface of the lithium-rich adsorbent. Finally, a desorbing agent is contacted with the lithium-rich adsorbent, so that lithium ions adsorbed on the lithium-rich adsorbent are desorbed and enter the desorbing agent to obtain a desorption solution containing lithium, and the lithium-rich adsorbent is regenerated into the lithium adsorbent.

In some embodiments, in the process of lithium adsorption, the flow rate of the salt lake brine is 1.5 BV/h -3 BV/h, and the adsorption time is 2.5 h-4 h. The washing is performed multiple times, the flow rate of the cleaning agent used is 6 BV/h -9 BV/h, and the total amount of the cleaning agent is not higher than 2.5BV

In some embodiments, the temperature of the lithium desorption process is not higher than 45°C.

In some embodiments, during the lithium desorption process, the flow rate of the desorbing agent is 1.5 BV/h -2.5 BV/h, and the desorption time of the lithium desorption process is 2.5 h -4 h.

In the method for extracting lithium from salt lake provided in the present disclosure, the lithium adsorbent described above is used, so the lithium adsorption efficiency can be increased by 10% or more. For example, the extraction efficiency by adsorption by the adsorbent can reach 70%-90% at a brine flow rate of 2.0 BV/h -2.5 BV/h. Further, the water consumption for washing and desorption of the lithium-rich adsorbent can be reduced by about 20%, the desorption temperature can be significantly reduced by at least 10°C or more, or even about 30°C, and a qualified desorption solution with a lithium content higher than 500 mg/L can still be obtained. By this method, the use of heating energy is reduced, which has great economic and environmental benefits for lithium extraction from salt lake in water- and energy-deficient areas. The method for extracting lithium from salt lake has the advantages of simple process, low water consumption, low energy consumption, and high lithium extraction yield, thus being suitable for use in large-scale industrial production.

### BRIEF DESCRIPTION OF THE DRAWINGS

FIG. 1 is a process flowchart of a method for preparing a lithium adsorbent provided in an embodiment of the present disclosure; and
FIG. 2 is a process flowchart of a method for extracting lithium from salt lake provided in an embodiment of the present disclosure.

### DETAILED DESCRIPTION

The present disclosure provides a lithium adsorbent that can be used in the process of extracting lithium from salt lake. At least one of a vinylidene fluoride-chlorotrifluoroethylene copolymer and a fluoroolefin-vinyl ether copolymer is used as a binder, which is combined with a particular wetting and dispersing agent, so that the lithium adsorbent is imparted with good mechanical strength and low dissolution-loss rate, the lithium adsorption efficiency is improved, it's the service life is prolonged, the water consumption in the process of washing and lithium desorption of the adsorbent is saved, and the temperature of lithium desorption is reduced, and a desorption solution with a low magnesium-lithium ratio is obtained.

Specifically, according to a first aspect of the present disclosure, a lithium adsorbent is provided, including an adsorbent material, a binder, and a wetting and dispersing agent. The binder includes at least one of a vinylidene fluoride-chlorotrifluoroethylene (VDF-CTFE) copolymer and a fluoroolefin-vinyl ether copolymer (also referred to as FEVE fluorocarbon resin). The wetting and dispersing agent includes one or more of polyethylene glycol, sodium polyacrylate, polyvinyl alcohol, and a formaldehyde condensate.

In the lithium adsorbent provided in the present disclosure, the particular binder binds the adsorbent material and the wetting and dispersing agent together to form a lithium adsorbent being of high structural stability, high mechanical strength, good corrosion resistance, and low dissolution-loss rate and long service life after repeated lithium adsorption-desorption cycles. Moreover, the binder also allows the adsorbent to be of a surface state with suitable porosity and narrow pore size. As a result, the lithium adsorbent is of a high lithium adsorption efficiency, and the adsorption speed and efficiency of the lithium adsorbent will not be affected due to the reduction of effective active area. The wettability of the wetting and dispersing agent also contribute to the improvement of the adsorption efficiency and adsorption capacity of the adsorbent for lithium ions. In addition, with the synergistic effect of the surface smoothness and cleaning effect of the particular binders and the wettability of the wetting and dispersing agent, the impurities can be easily washed off during the washing process of the lithium adsorbent after adsorbing lithium, and the process of lithium desorption is convenient. This saves water consumption in the cleaning and desorption process, reduces the rate of dissolution loss of the adsorbent in these processes, and lowers the desorption temperature, thus being of great significance for industrialized lithium extraction in areas with serious energy shortages such as salt lakes. Qualified desorption solution with low magnesium-lithium ratio and high lithium content is obtained.

In some embodiments, during lithium extraction from salt lake with the lithium adsorbent, the lithium adsorption efficiency is increased by 10% or more. For example, the extraction rate by adsorption by the lithium adsorbent can reach 70%-90% at a brine flow rate of 2.0 BV/h -2.5 BV/h, and the lithium adsorbent is resistant to impact and corrosion of the brine, and is of annual dissolution-loss rate of less than 5% (where the dissolution-loss rate refers to the weight percentage of the loss of the lithium adsorbent over time), and a long service life. The total water consumption for washing and lithium desorption of the lithium adsorbent with adsorbed lithium ions can be reduced by about 20%, being of great economic and environmental benefits. In addition, the desorption temperature for eluting and desorbing the absorbed lithium ions on the adsorbent can be reduced by 10°C or more, or even about 30°C, and a qualified desorption solution with a lithium content higher than 500 mg/L can still be obtained.

In some embodiments, the lithium adsorbent has pores. The presence of pores allows the lithium adsorbent to have a network of channels for gas and liquid diffusion. In some embodiments, the lithium adsorbent has a porosity of 20%-45%. A proper porosity contributes to the high adsorption/desorption rate of the lithium adsorbent while the lithium adsorbent has high mechanical strength and low dissolution-loss rate. In some embodiments, the lithium adsorbent has a pore size distribution ranging from 1 nm to 100 nm.

In some embodiments, the molecular weight of the vinylidene fluoride-chlorotrifluoroethylene copolymer or the fluoroolefin-vinyl ether copolymer is 100,000-800,000. Appropriate high-molecular-weight binder is of better bonding effect, and the risk of cracking and breaking of the lithium adsorbent during use is reduced, thus the service life is extended. The molar ratio of the structural unit derived from vinylidene fluoride to the structural unit derived from chlorotrifluoroethylene in the vinylidene fluoride-chlorotrifluoroethylene copolymer can be 1: (1-5). In some embodiments, the molar ratio of the structural unit derived from vinylidene fluoride to the structural unit derived from chlorotrifluoroethylene is 1: 4. In some embodiments, the binder is a vinylidene fluoride-chlorotrifluoroethylene copolymer, or a mixture of a vinylidene fluoride-chlorotrifluoroethylene copolymer and a fluoroolefin-vinyl ether copolymer.

In some embodiments, the wetting and dispersing agent includes one or more of polyethylene glycol, sodium polyacrylate, polyvinyl alcohol, and a formaldehyde condensate. The formaldehyde condensates may include, but are not limited to, one or more of a naphthalenesulfonate formaldehyde condensate, a methylnaphthalenesulfonate formaldehyde condensate, a benzylnaphthalenesulfonate formaldehyde condensate, a phenolsulfonate formaldehyde condensate and the like. In some embodiments, the molecular weight of the formaldehyde condensate is 4000-10000; and the molecular weight of the sodium polyacrylate is 5000-10000.

In some embodiments, the wetting and dispersing agent is polyethylene glycol. Polyethylene glycol has good wetting and dispersing abilities. In some embodiments, the molecular weight of the polyethylene glycol is 10000-30000. Higher-molecular-weight polyethylene glycol is less soluble in water with the adsorbent, resulting in a longer service life.

In some embodiments, based on the weight of the lithium adsorbent, the content of the adsorbent material is 80 wt%-95 wt%, the content of the binder is 4 wt%-17 wt%, and the content of the wetting and dispersing agent is 1 wt%-5 wt%. With a combination of the adsorbent material, the binder, and the wetting and dispersing agent in an appropriate proportion, the overall lithium adsorbent is of good structural stability, adsorption effect and desorption effect. In some embodiments, the content of the adsorbent material is 85 wt%-92 wt%. In some embodiments, the content of the binder is 5 wt%-15 wt%. Further, in some embodiments, the content of the binder is 6 wt%-12 wt%. In some embodiments, the content of the wetting and dispersing agent is 1 wt%-3 wt%.

In some embodiments, the binder accounts for 8%-12.5% by weight of the adsorbent material. An appropriate amount of the binder can not only ensure a high structural stability and a long service life (not easy to break) of the lithium adsorbent but also weaken its reducing effect on the adsorption capacity of the obtained lithium adsorbent.

In some embodiments, the wetting and dispersing agent accounts for 1%-5% by weight of the adsorbent material. Polyethylene glycol allows the adsorbent material to be more uniformly distributed in the lithium adsorbent granules, the backbone to be more stable, and the wettability of the lithium adsorbent granules to be improved, and thus the rate of adsorption/desorption of lithium is increased. In addition, polyethylene glycol can also be dissolved relatively slowly in brine, so that the porosity of the adsorbent is slowly increased, thus the adsorption efficiency of the adsorbent is further improved without causing a significant impact on the dissolution loss rate of the adsorbent or reducing the service life of the adsorbent obviously.

In some embodiments, the ratio of the weight of the adsorbent material to the total weight of the binder and the wetting and dispersing agent is greater than or equal to 8:1. This contributes to the good structural stability and excellent adsorption and desorption performances of the lithium adsorbent. In some embodiments, the ratio can be in the range of (8-10): 1. Specifically, the ratio can be 8.5, 9:1, or 9.5:1.

In some embodiments, the adsorbent material may be, for example, an aluminum-based adsorbent material, a manganese-based adsorption material (such as a combination of spinel-type manganese oxide and lithium ions), a titanium-based adsorbent material (such as a metatitanate lithium ion sieve adsorbent), and an iron-based adsorbent, etc. In some embodiments of the present disclosure, the adsorbent material is an aluminum-based adsorbent material. The aluminum-based adsorbent material can be a combination of aluminum hydroxide and a lithium-containing compound (such as lithium halide, and lithium sulfate, etc.). The aluminum-based adsorbent material can adsorb lithium ions from a lithium-containing solution. After reaching saturated adsorption, the lithium ions are eluted off with water at a certain temperature, to be released and desorbed into a solution. Generally, this type of material is mainly composed of aluminum hydroxide, with a lithium compound embedded inside/outside, and preferably having an octahedral space structure. In some embodiments, the aluminum-based adsorbent material can be represented by LiₐX·mAl(OH)₃·nH₂O, in which X can be Cl⁻ or SO₄²⁻; a=1 or 2; m is 1-5, and m is 2 in some embodiments; and n is 1-5. Further, to give a higher lithium adsorption capacity of the lithium adsorbent of the present disclosure, before lithium extraction from salt lake with the lithium adsorbent of the present disclosure, lithium can be appropriately desorbed from the lithium adsorbent to allow the adsorbent material to have more lithium vacancies. For example, the lithium desorption may be carried out by introducing water at a flow rate of 2-3 BV/h for 10 h or more. The aluminum-based adsorbent material obtained after the lithium desorption is represented by (1-x)Liₐ^{,}X·mAl(OH)₃·nH₂O, where 0<x<1.

The aluminum-based adsorbent material can be synthesized by a mechanochemical method, or by soaking, acidification conversion, and precipitation, etc. For example, LiCl·mAl(OH)₃·nH₂O can be prepared by soaking aluminum hydroxide in a LiCl solution, or by immersing aluminum hydroxide in a LiOH solution followed by acidification and conversion, or by co-precipitation of AlCl₃ and a LiCl solution, or by grinding LiOH and aluminum hydroxide.

In some embodiments, the lithium adsorbent may be columnar granules. The columnar lithium adsorbent granules can be formed simply, and is of high surface smoothness, so that the wear and dusting due to squeezing and friction of one other during use is avoided, and the loss is reduced. In some embodiments, the diameter of the lithium adsorbent is 1.2mm-1.8mm, and the length is 1.5mm-2.5mm. A lithium adsorbent with such a shape and suitable size gives a path that is more suitable for the diffusion of a liquids and ions, and when the adsorbent is squeezed, it is easy to leave a certain gap to facilitate the penetration of brine, thus facilitating the improvement of the adsorption efficiency for lithium ions, making the ion exchange between lithium ions and water easier during the desorption process, and thus reducing the lithium desorption temperature and the amount of desorption water to ensure that the adsorbed lithium is completely desorbed.

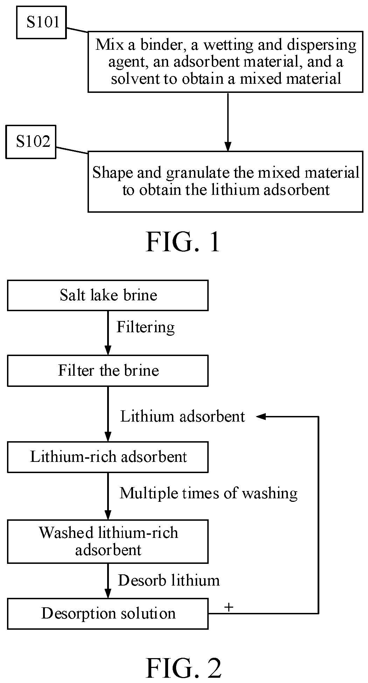

Referring to FIG. 1, according to a second aspect of the present disclosure, a method for preparing the lithium adsorbent is provided, which includes the following steps. Step S101: A binder, a wetting and dispersing agent, an adsorbent material, and a solvent are mixed to obtain a mixed material. The binder includes at least one of a vinylidene fluoride-chlorotrifluoroethylene copolymer and a fluoroolefin-vinyl ether copolymer, and the wetting and dispersing agent includes polyethylene glycol. Step S102: The mixed material is shaped and granulated to obtain the lithium adsorbent.

In some embodiments, the mixing method includes any one or more of stirring, ball milling and mechanical fusion. In some embodiments, the mixing is carried out by stirring. In some embodiments, the rotational speed of the stirring is 60-100 rpm. In some embodiments, to obtain a mixed material with a good mixing effect, the binder, the wetting and dispersing agent, and the solvent are mixed, and then the adsorbent material is added and mixed. The solvent may include any one or more of acetone, ethyl acetate, butyl acetate, and tetrahydrofuran.

In some embodiments, the shaping and granulating method may be carried out by, without limitation, spray drying or by using a granulator. For the shaping and granulating, a molten mixed solution is generally processed at a specific temperature. The solvent can be removed during the granulating, so the lithium adsorbent granules obtained after the granulating generally do not contain the solvent. For example, after the mixed material is transferred into a granulator, round strips may be first squeezed out or cut out, and then cut into columnar granules of a certain length by rotating blades.

In some embodiments, the mixed material may also contain a pore-forming agent (such as a bicarbonate). After the shaping and granulating, the pore-forming agent such as a bicarbonate may be removed by heating, and consequently the lithium adsorbent is imparted with a certain porosity.

The preparation method of the lithium adsorbent provided in the present disclosure is simple, easy to operate and suitable for use in large-scale production, and the lithium adsorbent prepared is of stable structure, long service life and good lithium adsorption/desorption effect.

Referring to FIG. 2, according to a third aspect of the present disclosure, a method for extracting lithium from salt lake is provided, which includes the following steps. The salt lake brine is contacted with the lithium adsorbent described in the first aspect of the disclosure to adsorb lithium, to obtain a lithium-rich adsorbent. The lithium-rich adsorbent is washed, and then lithium is desorbed by using a desorbing agent to obtain a desorption solution.

In the present disclosure, the salt lake brine is contacted with the lithium adsorbent for the purpose of adsorbing lithium ions in the salt lake brine on the lithium adsorbent and transforming the lithium adsorbent into a lithium-rich adsorbent. The lithium adsorbent can be filled in a carrier such as an exchange column (e.g. glass column, stainless steel column) or an adsorption tower. The adsorption of lithium in the salt lake brine can be realized by flowing the brine through the carrier filled with the lithium adsorbent and contacting the brine with the lithium adsorbent. Then, the carrier filled with the lithium-rich adsorbent is washed to wash off impurities on the surface of the lithium-rich adsorbent. Finally, a desorbing agent is contacted with the lithium-rich adsorbent, so that lithium ions adsorbed on the lithium-rich adsorbent are desorbed and enter the desorbing agent to obtain a desorption solution containing lithium, and the lithium-rich adsorbent is regenerated into the lithium adsorbent.

In some embodiments, before the salt lake brine is contacted with the lithium adsorbent, the method further includes the following step. The brine is filtered to remove impurities (especially granular impurities). The filtering may be carried out using any one or more of a bag filter, a backwash filter, and a candle filter. This ensures that the material after filtration does not affect the adsorption function of the lithium adsorbent.

In some embodiments, in the process of lithium adsorption, the flow rate of the salt lake brine is 1.5 BV/ h -3 BV/ h. BV generally refers to the filling volume of the lithium adsorbent (the same below). 1.5 BV/h -3 BV/h represents that the flow rate of brine in volume is 1.5-3 times the volume of the lithium adsorbent per hour. In some embodiments, the lithium adsorption time may be 2.5 h -4 h, such as 2.8 h, 3 h, 3.5 h, or 3.8 h.

In some embodiments, the total amount of the salt lake brine to be adsorbed is 6 BV-8 BV That is, the volume of salt lake brine to be brought into contact with the lithium adsorbent is 6-8 times the filling volume of the lithium adsorbent. The amount of the salt lake brine to undergo adsorption may vary according to the content of lithium in the salt lake brine (generally 60 ppm -500 ppm).

In some embodiments, the lithium content adsorbed by the lithium adsorbent is controlled to in the range of 1.8 mg/g-2.8 mg/g. By controlling the lithium content adsorbed by the lithium adsorbent to be in a proper range, the subsequent preparation of lithium carbonate can be facilitated. The adsorption time is controlled to be in a proper range, the production efficiency is improved and the dissolution-loss rate of the adsorbent is reduced.

In some embodiments, the lithium-rich adsorbent is washed mainly for the purpose of washing away impurities adsorbed on the surface of the lithium-rich adsorbent that has adsorbed lithium ions. The washing may be performed multiple times, for example, 2-4 times, and further 3-4 times. In the washing process, the flow rate of the cleaning agent is 6 BV/h-9 BV/h, such as 6.5, 7, 8, 8.5, or 9 BV/h.

In some embodiments, the time of each washing process is 3 min-6 min. The total washing time is 25 min or less, and further is 20 min or less. In some embodiments, the total amount of the cleaning agent is not higher than 2.5BV The cleaning agent may be pure water or low-solid water. The pure water may be deionized water, distilled water, groundwater, tap water, or the like.

In some embodiments, the washed lithium-rich adsorbent is subjected to lithium desorption using a desorbing agent, to desorb lithium ions adsorbed on the lithium-rich adsorbent and regenerate the lithium adsorbent. The lithium adsorbent is further contacted with the salt lake brine to adsorb and extract lithium and further used to treat and utilize the obtained desorption solution.

In some embodiments, the desorbing agent is deionized water, distilled water, clean groundwater, tap water, or the like. The temperature of the desorbing agent (that is, the temperature of the desorption process) may be not more than 45°C, such as 28°C, 30°C, 32°C, 35°C, 38°C, or 40°C. Because the foregoing lithium adsorbent is used in the method for extracting lithium from salt lake, the temperature of the desorbing agent can be reduced during desorption to save the heating energy. In some embodiments, the temperature of the desorbing agent may be not more than 40°C, for example, 30-40°C, and further, 30-35°C.

In some embodiments, the flow rate of the desorbing agent is 1.5-2.5 BV/h, for example, 1.8 BV/h, 2 BV/h or 2.2 BV/h. This can ensure that the lithium ion content in the desorption solution is relatively high, and the desorption time will not be too long. In some embodiments, the desorption time is 2.5-4 h, for example, 2.8 h, 3 h, 3.5 h, and 3.8 h.

In some embodiments, the magnesium-lithium weight ratio in the desorption solution is 5 or less, and further 3 or less.

In the method for extracting lithium from salt lake provided in the present disclosure, the lithium adsorbent described above is used, so the lithium adsorption efficiency can be increased by 10% or more. For example, the extraction efficiency by adsorption by the adsorbent can reach 70-90% at a brine flow rate of 2.0-2.5 BV/h. Further, the water consumption for washing and desorption of the lithium-rich adsorbent can be reduced by about 20%, the desorption temperature can be significantly reduced by at least 10°C or more, or even about 30°C, and a qualified desorption solution with a lithium content higher than 500 mg/L can still be obtained. By this method, the use of heating energy is reduced, which has great economic and environmental benefits for lithium extraction from salt lake in water- and energy-deficient areas. The method for extracting lithium from salt lake has the advantages of simple process, low water consumption, low energy consumption, and high lithium extraction yield, thus being suitable for use in large-scale industrial production.

The technical solution of the implementations of the present disclosure is described in detail with several examples hereinafter.

The composition of the salt lake brine for lithium extraction used in the following examples is shown in Table 1 below.

**Table 1**

| Composition of salt lake brine | |
|---|---|
| Li (%) | 0.0138 |
| Na (%) | 0.2325 |
| Mg (%) | 7.0719 |
| K (%) | 0.6241 |
| Ca (%) | 0.2970 |
| B (%) | 0.0133 |
| Cl⁻ (%) | 22.7497 |
| SO₄²⁻ (%) | 0.0577 |
| Mg: Li | 222.4 |

### Example 1

A method for preparing a lithium adsorbent includes the following steps.

A binder (specifically a VDF-CTFE copolymer with a molecular weight of about 20,000) and polyethylene glycol (with a molecular weight of 10,000) were dispersed in a solvent (specifically ethyl acetate and acetone at a volume ratio of 9:1) and uniformly stirred at a high speed, and an adsorbent material LiCl·2Al(OH)₃·nH₂O was added and stirred uniformly, to obtain a mixed material. In the mixed material, the weight ratio of the adsorbent material, the binder, and the polyethylene glycol 10,000 was 9: 0.9: 0.1, and polyethylene glycol was used as a wetting and dispersing agent. The mixed material was shaped and granulated with a granulating agent, and the solvent was removed, to obtain the lithium adsorbent. The lithium adsorbent was columnar granules with a diameter of about 1.5 mm and a length of about 2.2 mm. The lithium adsorbent had a porosity of 34% and a pore size distribution ranging from 3 nm to 50 nm.

The lithium adsorbent obtained in Example 1 was used in a process of lithium extraction from salt lake. Before the lithium adsorbent was used for lithium extraction from salt lake, the lithium adsorbent underwent lithium desorption to a certain extent, so as to provide lithium vacancies. The lithium desorption was carried out by introducing water at a flow rate of 2-3 BV/h for 10 h or more.

Specifically, a flowchart of the process for lithium extraction from salt lake is shown in FIG. 1. The process specifically includes the following steps.
(1) The lithium adsorbent obtained in Example 1 was filled in a glass adsorption column in a filling volume of 0.9 dm³. The salt lake brine for lithium extraction was filtered by using a backwash filter and then allowed to flow through an adsorption column filled with the lithium adsorbent at a flow rate of 2 BV/h, so that lithium ions therein were adsorbed on the lithium adsorbent to convert the lithium adsorbent into a lithium-rich adsorbent. The brine for adsorption was 5400 mL (that is, 6 BV), the adsorption temperature was 25°C, and the total adsorption time was about 3 h.
(2) The adsorption column containing the lithium-rich adsorbent was washed with water to remove impurities on the surface of the lithium-rich adsorbent. The washing was carried out with water at a flow rate of 7.5 BV/h for 4 times, taking 5 min each time for a total of 20 min, with a total water consumption of 2250 mL, that is, 2.5 BV
(3) The washed lithium-rich adsorbent was eluted and desorbed with clean tap water at a flow rate of 2 BV/h at 30°C to desorb the lithium ions adsorbed, to obtain a desorption solution. The amount of the desorbing water was 2000 mL and the total desorption time was 3 h.

The amount of lithium adsorbed and adsorption yield of lithium during the adsorption process, and the lithium content and ratio of magnesium to lithium in the desorption solution were measured. The amount of lithium adsorbed is a ratio of the weight of lithium adsorbed by the adsorbent (i.e., the difference between the weight of the lithium element in brine after adsorption and in brine before adsorption) to the weight of the adsorbent. The adsorption yield (also referred to as "lithium extraction efficiency") is the ratio of the weight of lithium adsorbed by the lithium adsorbent to the weight of lithium in the original brine.

In addition, the foregoing adsorption-washing-desorption process was repeated for 100 cycles. A rate of decrease in the weight of the adsorbent after the 100th cycle compared with the weight of the adsorbent after the 1st cycle was measured. The rate of decrease could be used to measure the stability of the adsorbent. Moreover, the heat resistance of the adsorbent in Example 1 was also tested through a process including the following steps. The lithium adsorbent that had not been used for adsorption from the brine was soaked in hot water at 60°C for 1 h, and sampled to detect the content of lithium ions (mg/L) in the hot water. A higher content of lithium ions detected in the water indicated that the lithium adsorbent has a greater degree of structural damage and a worse heat resistance.

The above results are summarized in Table 2 below.

### Example 2

The lithium adsorbent in Example 2 differed from that in Example 1 in that the binder used was an FEVE fluorocarbon resin with a molecular weight of 20,000. The lithium adsorbent used in Example 2 had a porosity of 27% and a pore size distribution ranging from 5 nm to 45 nm.

According to the method in Example 1, the lithium adsorbent in Example 2 was subjected to various tests shown in Table 2.

### Example 3

The lithium adsorbent in Example 3 differed from that in Example 1 in that the binder used was a VDF-CTFE copolymer and a FEVE fluorocarbon resin at a weight ratio of 1:1, and the molecular weight of polyethylene glycol was 2000. The lithium adsorbent used in Example 3 had a porosity of 37% and a pore size distribution ranging from 3 nm to 45 nm.

According to the method in Example 1, the lithium adsorbent in Example 3 was subjected to various tests shown in Table 2.

### Example 4

The lithium adsorbent in Example 4 differed from that in Example 1 in that the weight ratio of the adsorbent material, the binder, and polyethylene glycol was 9.5: 0.4: 0.1. The lithium adsorbent used in Example 4 had a porosity of 28% and a pore size distribution ranging from 1 nm to 20 nm.

According to the method in Example 1, the lithium adsorbent in Example 4 was subjected to various tests shown in Table 2.

### Example 5

The lithium adsorbent in Example 5 differed from that in Example 1 in that the weight ratio of the adsorbent material, the binder, and polyethylene glycol was 8: 1.7: 0.3. The lithium adsorbent used in Example 5 had a porosity of 40% and a pore size distribution ranging from 10 nm to 90 nm.

According to the method in Example 1, the lithium adsorbent in Example 5 was subjected to various tests shown in Table 2.

### Example 6

The lithium adsorbent in Example 6 differed from that in Example 1 in that the molecular weight of the binder (VDF-CTFE copolymer) was 200,000. The lithium adsorbent used in Example 6 had a porosity of 32% and a pore size distribution ranging from 3 nm to 40 nm.

According to the method in Example 1, the lithium adsorbent in Example 6 was subjected to various tests shown in Table 2.

### Example 7

The lithium adsorbent in Example 7 differed from that in Example 1 in that the molecular weight of the binder (VDF-CTFE copolymer) was 600,000. The lithium adsorbent used in Example 7 had a porosity of 35% and a pore size distribution ranging from 3 nm to 65 nm.

According to the method in Example 1, the lithium adsorbent in Example 7 was subjected to various tests shown in Table 2.

### Example 8

The lithium adsorbent in Example 8 differed from that in Example 1 in that the molecular weight of the binder (VDF-CTFE copolymer) was 1,000,000. The lithium adsorbent used in Example 8 had a porosity of 42% and a pore size distribution ranging from 6 nm to 100 nm.

According to the method in Example 1, the lithium adsorbent in Example 8 was subjected to various tests shown in Table 2.

### Example 9

The lithium adsorbent in Example 9 differed from that in Example 1 in that the wetting and dispersing agent used was polyethylene glycol having a molecular weight of 5,000. The lithium adsorbent used in Example 9 had a porosity of 31% and a pore size distribution ranging from 2 nm to 37 nm.

According to the method in Example 1, the lithium adsorbent in Example 9 was subjected to various tests shown in Table 2.

### Example 10

The lithium adsorbent in Example 10 differed from that in Example 1 in that the wetting and dispersing agent used was sodium polyacrylate having a molecular weight of 6000. The lithium adsorbent used in Example 10 had a porosity of 33% and a pore size distribution ranging from 3 nm to 55 nm.

According to the method in Example 1, the lithium adsorbent in Example 10 was subjected to various tests shown in Table 2.

To highlight the beneficial effects of the examples of the present disclosure, the following comparative examples are provided.

### Comparative Example 1

A lithium adsorbent was used, containing an adsorbent material LiCl·2Al(OH)₃·nH₂O and a binder epoxy resin at a weight ratio of 9:1.

According to the method in Example 1, the lithium adsorbent in Comparative Example 1 was subjected to various tests shown in Table 2.

### Comparative Example 2

A lithium adsorbent was used, containing an adsorbent material LiCl·2Al(OH)₃·nH₂O and a binder polypolyvinylidene fluoride at a weight ratio of 9:1.

According to the method in Example 1, the lithium adsorbent in Comparative Example 2 was subjected to various tests shown in Table 2.

### Comparative Example 3

A lithium adsorbent was used, containing an adsorbent material LiCl·2Al(OH)₃·nH₂O, a binder polypolyvinylidene fluoride and a wetting and dispersing agent polyethylene glycol at a weight ratio of 9:0.9:0.1.

According to the method in Example 1, the lithium adsorbent in Comparative Example 2 was subjected to various tests shown in Table 2.

Table 2 below summarize the test results of various examples and comparative examples

**Table 2**

| No. | Amount of lithium adsorbed (mg/g) | Adsorption yield (%) | Lithium content in desorption solution (mg/L) | Ratio of magnesium to lithium in desorption solution | Lithium content in water after heat resistance test of the adsorbent (mg/L) | Rate of decrease in weight of the adsorbent after 100 cycles |
|---|---|---|---|---|---|---|
| Example 1 | 2.25 | 72 | 526 | 2.3:1 | 5 | <0.1% |
| Example 2 | 2.2 | 70 | 517 | 2.1:1 | 6 | <0.1% |
| Example 3 | 2.4 | 76 | 535 | 2.2:1 | 4 | <0.1% |
| Example 4 | 2.6 | 82 | 528 | 2.8:1 | 9 | 0.9% |
| Example 5 | 1.8 | 60 | 437 | 3:1 | 3 | <0.1% |
| Example 6 | 2.3 | 73 | 529 | 2.2:1 | 4 | <0.1% |
| Example 7 | 2.3 | 73 | 528 | 2.2:1 | 4 | <0.1% |
| Example 8 | 2.25 | 72 | 522 | 2.4:1 | 8 | 0.6% |
| Example 9 | 2.25 | 71 | 525 | 2.4:1 | 10 | 0.7% |
| Example 10 | 2.25 | 70 | 524 | 2.5:1 | 5 | <0.1% |
| Comparative Example 1 | 1.8 | 60 | 361 | 4:1 | 36 | 5% |
| Comparative Example 2 | 1.9 | 61 | 403 | 3.5:1 | 16 | 1.1% |
| Comparative Example 3 | 2.0 | 63 | 431 | 3.5:1 | 13 | 1% |

It can be known from Table 2 that with the same percentages by weight of the adsorbent material in the adsorbent, a particular binder and wetting and dispersing agent are used in the lithium adsorbent in Example 1 of the present disclosure, so the lithium ions are less dissolved out of the adsorbent body under relatively hot conditions, indicating that the structure of the adsorbent is not easy to be damaged and the adsorbent has excellent heat resistance. After repeated adsorption-desorption cycles, the rate of breakage of the adsorbent in the examples of the present disclosure is low, and the weight loss rate of the adsorbent (that is, the rate of decrease in weight of the adsorbent after 100 cycles) is much lower than that in each comparative example, indicating that the adsorbent provided in the examples of the present disclosure has a high structural stability and a long service life. In addition, it can be known from the comparison between Example 1 and Comparative Examples 1-3 that the magnesium-to-lithium ratio in the desorption solution obtained in the example of the present disclosure is lower upon lithium extraction with the adsorbent provided in the example of the present disclosure and the adsorbent provided in the comparative examples under the same conditions. This indicates that there are less impurities in the desorption solution. Thus the purpose of lithium-magnesium separation is achieved. Further, this indicates that the lithium adsorbent in the example of the present disclosure is easy to wash, and the water consumption for washing can be further reduced.

Moreover, the higher the adsorption capacity of the adsorbent is, generally the higher the desorption temperature will be, and the higher the lithium content in the desorption solution will be. With the same adsorption capacity and desorption temperature, the desorption solution obtained from a difficult-to-desorb adsorbent has a lower lithium content than that in the desorption solution obtained from an easy-to-desorb adsorbent. For example, it can be known from the comparison between Example 5 and Comparative Example 1 that with the same adsorption capacities and desorption temperature, the lithium contents in the desorption solutions have large difference, and the lithium content in the desorption solution obtained in Comparative Example 1 is lower. To obtain the same lithium content as that in Example 5, the desorption temperature in Comparative Example 1 needs to be raised to about 40°C (by 10°C). In addition, the proportion of the adsorbent material in the adsorbent of Example 5 is lower than that in Comparative Example 1, but the adsorption yield and the amount of lithium adsorbed in the two examples are comparable. This further indicates that the particular binder and polyethylene glycol provided in the present disclosure also contribute to the improvement of the adsorption effect of the adsorbent. The proportion of the binder in the adsorbent of Example 5 is higher than that in Examples 1-4, so the adsorbent of Example 5 has the most excellent structural stability. Consequently, the lithium content in water after the heat resistance test and the rate of decrease in the weight after 100 cycles are lowest.

Moreover, the difference between Example 1 and Examples 6-8 only lies in the different molecular weights of the binder VDF-CTFE copolymer. When the molecular weight of the copolymer is in the range of 100,000-800,000, the lithium adsorbent has a good desorption effect and a good self-stability. The difference between Example 1 and Example 9 only lies in the different molecular weights of the wetting and dispersing agent PEG. The molecular weight of PEG in Example 9 is lower, so the thermal stability and structural stability are slightly lower than those in Example 1.

The foregoing descriptions are some implementations of the present disclosure. A person of ordinary skill in the art may make several improvements and refinements without departing from the principle of the present disclosure, and the improvements and refinements shall fall within the protection scope of the present disclosure.

## Claims

1. A lithium adsorbent, comprising an adsorbent material, a binder, and a wetting and dispersing agent, the binder comprising at least one of a vinylidene fluoride-chlorotrifluoroethylene copolymer and a fluoroolefin-vinyl ether copolymer; and the wetting and dispersing agent comprising one or more of polyethylene glycol, sodium polyacrylate, polyvinyl alcohol, and a formaldehyde condensate.

2. The lithium adsorbent according to claim 1, wherein based on a weight of the lithium adsorbent, a content of the adsorbent material is 80 wt%-95 wt%, a content of the binder is 4 wt%-17 wt%, and a content of the wetting and dispersing agent is 1 wt%-5 wt%.

3. The lithium adsorbent according to claim 1 or 2, wherein a ratio of a weight of the adsorbent material to a total weight of the binder and the wetting and dispersing agent is greater than or equal to 8:1.

4. The lithium adsorbent according to any one of claims 1 to 3, wherein a weight of the binder is 8%-12.5% of a weight of the adsorbent material.

5. The lithium adsorbent according to any one of claims 1 to 4, wherein a molecular weight of the vinylidene fluoride-chlorotrifluoroethylene copolymer or the fluoroolefin-vinyl ether copolymer is 100,000-800,000.

6. The lithium adsorbent according to claim 5, wherein a molar ratio of a structural unit derived from vinylidene fluoride to a structural unit derived from chlorotrifluoroethylene in the vinylidene fluoride-chlorotrifluoroethylene copolymer is 1: (1-5).

7. The lithium adsorbent according to any one of claims 1 to 6, wherein the wetting and dispersing agent comprises polyethylene glycol having a molecular weight of 10,000-30,000.

8. The lithium adsorbent according to any one of claims 1 to 7, wherein the wetting and dispersing agent comprises sodium polyacrylate having a molecular weight of 5,000-10,000.

9. The lithium adsorbent according to any one of claims 1 to 8, wherein the wetting and dispersing agent comprises a formaldehyde condensate having a molecular weight of 4,000-10,000.

10. The lithium adsorbent according to any one of claims 1 to 9, wherein a weight of the wetting and dispersing agent is 1%-5% of a weight of the adsorbent material.

11. The lithium adsorbent according to any one of claims 1 to 10, wherein the adsorbent material is an aluminum-based adsorbent material, the aluminum-based adsorbent material is LiₐX·mAl(OH)₃·nH₂O, in which X is Cl⁻ or SO₄²⁻, a=1 or 2, m is 1-5, and n is 1-5.

12. The lithium adsorbent according to any one of claims 1 to 11, wherein the lithium adsorbent is columnar granules, and a granule diameter of the lithium adsorbent is1.2 mm to 1.8 mm and a length of the lithium adsorbent is 1.5 mm to 2.5 mm.

13. The lithium adsorbent according to any one of claims 1 to 12, wherein a porosity of the lithium adsorbent is 20%-45%, and a pore size distribution of the lithium adsorbent is in a range of 1 nm -100 nm.

14. A method for preparing the lithium adsorbent according to any one of claims 1 to 13, the method comprising:
mixing the binder, the wetting and dispersing agent, the adsorbent material and a solvent to obtain a mixed material, the binder comprising at least one of the vinylidene fluoride-chlorotrifluoroethylene copolymer and the fluoroolefin-vinyl ether copolymer; and the wetting and dispersing agent comprising one or more of polyethylene glycol, sodium polyacrylate, polyvinyl alcohol, and a formaldehyde condensate; and
shaping and granulating the mixed material to obtain the lithium adsorbent.

15. The method for preparing the lithium adsorbent according to claim 14, wherein the mixing method comprises one or more of stirring, ball milling and mechanical fusion.

16. The method for preparing the lithium adsorbent according to claim 14 or 15, wherein the step of mixing the binder, the wetting and dispersing agent, the adsorbent material and the solvent comprises:
mixing the binder, the wetting and dispersing agent, and the solvent, and then adding the adsorbent material and mixing.

17. A method for extracting lithium from salt lake, comprising:
contacting a salt lake brine with the lithium adsorbent according to any one of claims 1 to 13 to perform lithium adsorption, to obtain a lithium-rich adsorbent; and
washing the lithium-rich adsorbent, and then perform lithium desorption by using a desorbing agent to obtain a desorption solution.

18. The method for extracting lithium from salt lake according to claim 17, wherein in a process of lithium adsorption, a flow rate of the salt lake brine is 1.5 BV/h-3 BV/h, and a adsorption time is 2.5 h-4 h; and
the washing is performed multiple times, a flow rate of the cleaning agent used is 6 BV/h-9 BV/h, and a total amount of the cleaning agent is not higher than 2.5BV

19. The method for extracting lithium from salt lake according to claim 17 or 18, wherein a temperature of the lithium desorption process is not higher than 45°C.

20. The method for extracting lithium from salt lake according to any one of claims 17 to 19, wherein during the lithium desorption process, a flow rate of the desorbing agent is 1.5 BV/h-2.5 BV/h, and a desorption time of the lithium desorption process is 2.5 h-4 h.
